# EUROPÄISCHE PATENTSCHRIFT

(11) **EP 1 472 116 B1**
(45) Veröffentlichungstag und Bekanntmachung des Hinweises auf die Patenterteilung: **27.07.2005**
(21) Anmeldenummer: 03704507.7
(22) Anmeldetag: 01.02.2003
(51) Int. Cl.: B60R 22/28, B60R 22/34

(54) **SICHERHEITSGURTAUFROLLER MIT SCHALTBAREM FLÜSSIGKEITSDÄMPFER**
SAFETY BELT RETRACTOR WITH SWITCHED LIQUID DAMPER
ENROULEUR DE CEINTURE DE SECURITE A AMORTISSEUR PAR LIQUIDE COMMUTABLE

(30) Priorität: 07.02.2002 DE 10204927
(43) Veröffentlichungstag der Anmeldung: 03.11.2004
(73) Patentinhaber: AUTOLIV DEVELOPMENT AB, 447 83 Vargarda (SE)
(72) Erfinder: LUCHT, Andreas, 25358 Horst (DE); WITTENBERG, Geert, Helge, 22848 Norderstedt (DE); MATZEN, Frank, 22459 Hamburg (DE); ZIEL, Erik, 25451 Quickborn (DE)
(74) Vertreter: Müller, Karl-Ernst, Dr.
(86) Internationale Anmeldenummer: PCT/EP2003/000996
(87) Internationale Veröffentlichungsnummer: WO 2003/066391

(56) Entgegenhaltungen:
- EP-A- 1 060 961
- WO-A-97/49583

## Beschreibung

Die Erfindung betrifft einen Sicherheitsgurtaufroller, insbesondere in Kraftfahrzeugen, mit einer Gurtwelle als Träger des darauf gewickelten Gurtbandes und mit einer im Blockierfall wirksam werdenden Kraftbegrenzungseinrichtung, welche aus einem mit einem viskosen Medium gefüllten Gehäuse mit einer Mehrzahl von darin feststehend angeordneten Zwischenscheiben und mit einer Mehrzahl von zwischen den Zwischenscheiben angeordneten, an die Gurtwelle angeschlossenen und mit dieser drehenden Scheibenkolben besteht, so dass durch die Relativbewegung von Scheibenkolben und Zwischenscheiben das Medium zwischen den zugeordneten Flächen zerrieben wird.

Ein Sicherheitsgurtaufroller mit den vorgenannten Merkmalen ist in der WO 01/58728 A1 beschrieben. Bei dem bekannten Gurtaufroller ist das zylindrische Gehäuse der Kraftbegrenzungseinrichtung auf der Außenseite des Gurtaufrollergehäuses angeschlossen und mit der Gurtwelle bzw. insbesondere mit einem Torsionsstab gekoppelt. Nach einem Ausführungsbeispiel ist in dem mit insbesondere Silikon als viskosem Medium gefüllten Gehäuse der Kraftbegrenzungseinrichtung eine Abfolge von feststehenden Zwischenscheiben angeordnet, zwischen die mit der in ihrer Drehbewegung zu dämpfenden Gurtwelle bzw. dem zu dämpfenden Torsionsstab verbundene Scheibenkolben mit einem radial abstehenden Kolbenflügel greifen. Bei der Relativbewegung von Scheibenkolben und Zwischenscheiben zueinander wird das Silikon zwischen den Scheibenflächen zerrieben, so dass der beabsichtigte Kraftverbrauch und damit die Kraftbegrenzung eintreten.

Mit dem bekannten Sicherheitsgurtaufroller bzw. dessen Kraftbegrenzung ist der Nachteil verbunden, dass seine Kraftbegrenzungseinrichtung nicht auf unterschiedliche Insassenparameter einstellbar ist. Während bekannt ist, dass derartige Flüssigkeitsdämpfer auf unterschiedliche Crashimpulse mit einer Änderung der aufgebrachten Begrenzungskraft reagieren, ist eine Anpassung an die unterschiedliche Masse einzelner Insassen bisher nicht möglich. So ist es wünschenswert, bei großen schweren Insassen die Begrenzungskraft auf einem hohen Niveau einzustellen, um beispielsweise bei Aufblasen eines im Fahrzeug eingebauten Airbags ein Durchschlagen auf den Airbag und damit ein entsprechendes Verletzungsrisiko für den Insassen zu verhindern. Ist jedoch eine kleinere, leichtere Person mit dem Sicherheitsgurt angeschnallt, können die Begrenzungskräfte niedriger eingestellt werden.

Der Erfindung liegt daher die Aufgabe zugrunde, eine an dem Sicherheitsgurtaufroller vorgesehene Kraftbegrenzungseinrichtung mit den gattungsgemäßen Merkmalen in ihrer Begrenzungskraft einstellbar einzurichten.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht in ihrem Grundgedanken vor,
dass das Niveau der Kraftbegrenzung in Abhängigkeit von den Parametern des mit dem von der Gurtwelle abgewickelten Gurtband angeschnallten Insassen mittels einer variablen Zu- und Abschaltung der Scheibenkolben an die Gurtwelle über eine zwischen Gurtwelle und Scheibenkolben angeordnete Schalteinrichtung einstellbar ist.

Zur Verwirklichung der Schaltbarkeit ist nach einem Ausführungsbeispiel der Erfindung vorgesehen, dass die Schalteinrichtung aus einem mit der Gurtwelle koppelbaren, über einen Antrieb axial in dem Gehäuse der Kraftbegrenzungseinrichtung verschiebbaren Schaltring besteht, der in Abhängigkeit von seiner Schaltstellung mit einem oder mehreren der Scheibenkolben in Formschlussverbindung steht, wobei vorgesehen sein kann, dass der Antrieb einen axial am Gehäuse der Kraftbegrenzungseinrichtung geführten und aus dem Gehäuse herausgeführten, mit dem Schaltring gekoppelten Übertragungshebel beaufschlagt.

Im einzelnen kann vorgesehen sein, dass der Schaltring die innere Umfangswand des ringförmig ausgebildeten Gehäuses der Kraftbegrenzungseinrichtung bildet und von einem den Schaltring innen überdeckenden und führenden Fortsatz der Gurtwelle untergriffen ist. Diese Ausbildung hat den Vorteil, dass das mit dem viskosen Medium gefüllte Gehäuse von dem Schaltring und dem ihn überdeckenden Fortsatz abgedichtet ist.

Hierbei kann zum einen der Fortsatz unmittelbarer Bestandteil der in ihrer Drehbewegung zu dämpfenden Gurtwelle sein. Zum anderen kann aber auch vorgesehen sein, dass der Fortsatz Bestandteil einer gesonderten, gegenüber dem Gehäuse der Kraftbegrenzungseinrichtung drehbar gelagerten und im Auslösefall mit der Gurtwelle zu koppelnden Zentralwelle ist; diese Ausbildung geht auf ein Prinzip der Anbindung der Kraftbegrenzungseinrichtung an die Gurtwelle zurück, bei welcher die Gurtwelle bei ihrem normalen Betrieb von der Kraftbegrenzungseinrichtung abgekoppelt ist und nur im Auslösefall nach Art des an sich bekannten Blockiersystems eines selbstsperrenden Gurtaufrollers über eine radial auslenkbare Zahnscheibe als Kupplungsglied mit der als Bestandteil der Kraftbegrenzungsvorrichtung vorgesehenen Zentralwelle zu koppeln ist.

Es kann vorgesehen sein, dass der Übertragungshebel den Fortsatz in einem Schlitz durchgreift und fest mit dem Schaltring verbunden ist.

Nach einem Ausführungsbeispiel der Erfindung ist vorgesehen, dass der Antrieb ein in Abhängigkeit von den Insassenparametern gesteuerter Motor ist.

Soweit Sicherheitsgurtaufroller mit einer an die Gurtwelle ankoppelbaren reversiblen Straffeinrichtung versehen sind, arbeitet die Straffeinrichtung üblicherweise in ihrem reversiblen Betrieb in Abhängigkeit von den Insassenparametern, so dass entsprechende Steuerungswerte hier bereits zur Verfügung stehen. Daher ist nach einem Ausführungsbeispiel der Erfindung vorgesehen, dass der Antrieb der Straffeinrichtung über eine mittels einer Kupplung ankoppelbare Übertragungswelle mit dem Übertragungshebel verbindbar ist.

Hierzu kann nach einem Ausführungsbeispiel der Erfindung vorgesehen sein, dass die Übertragungswelle an ihrem der Kraftbegrenzungseinrichtung zugewandten Ende mit einer Schnecke versehen ist, in deren Schneckengang der Übertragungshebel eingreift und durch die Drehung der Schnecke axial verschiebbar ist.

Die Erfindung umfasst gleichfalls die Zu- und Abschaltung der Scheibenkolben an einen mit der Gurtwelle verbundenen Torsionsstab, wie dies in der gattungsbildenden WO 01/58728 A1 vorgegeben ist.

In der Zeichnung ist ein Ausführungsbeispiel der Erfindung wiedergegeben, welches nachstehend beschrieben ist. Es zeigen:
- Fig. 1: einen Sicherheitsgurtaufroller mit Straffeinrichtung und Kraftbegrenzungseinrichtung in einer Perspektivansicht auf die Strafferseite,
- Fig. 2: den Gegenstand der Figur 1 in einer Perspektivansicht auf die Kraftbegrenzerseite,
- Fig. 3: die Kraftbegrenzungseinrichtung mit Antrieb in einer geschnittenen Einzeldarstellung,
- Fig. 4: die Verbindung von Übertragungshebel und Schaltring gemäß Figur 3 in einer vergrößerten Einzeldarstellung,
- Fig. 5: die Kraftbegrenzungseinrichtung gemäß Figur 3 in einer Perspektivansicht auf die Einstellseite.

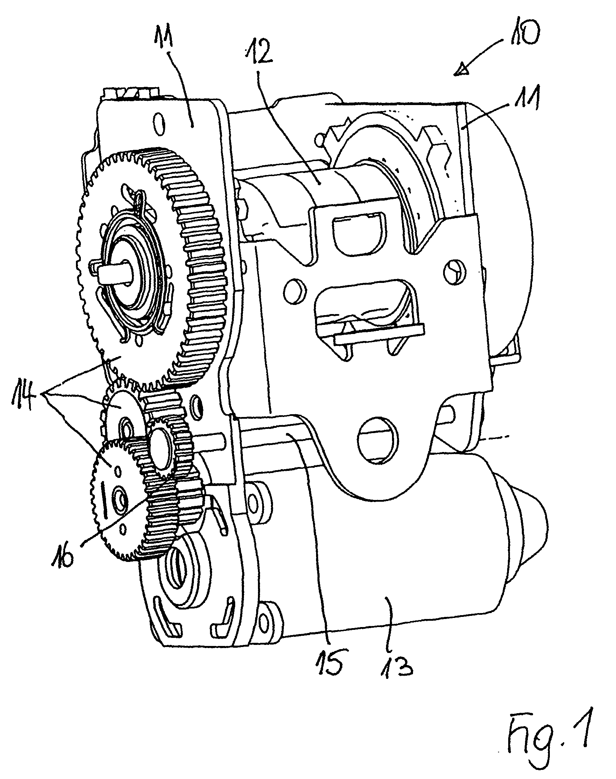

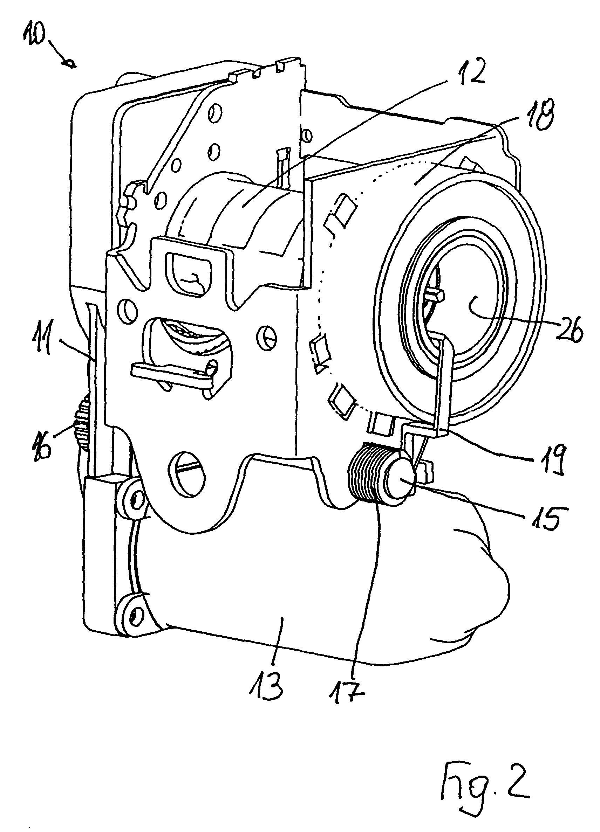

Der in den Figuren 1 und 2 jeweils in einer Gesamtansicht dargestellte Gurtaufroller 10 hat einen U-förmigen Rahmen 11, in dessen Seitenschenkeln eine Gurtwelle 12 drehbar gelagert ist. An dem Rahmen 11 des Gurtaufrollers 10 ist weiterhin ein Elektromotor 13 als Antrieb einer reversiblen Straffeinrichtung angeflanscht, dessen Funktion im einzelnen nicht Gegenstand der Erfindung und im übrigen bekannt ist. Der Elektromotor 13 ist über ein Getriebe 14 mit der Gurtwelle 12 zu koppeln, so dass die Gurtstraffung im einzelnen wirksam wird. Aus den Figuren 1 und 2 ist bereits eine zusätzlich angeordnete Übertragungswelle 15 ersichtlich, die an ihrem einen Ende über ein Antriebszahnrad 16 an das Getriebe 14 der Straffeinrichtung zu koppeln ist und an ihrem anderen Ende eine Schnecke 17 als Antrieb für die noch zu beschreibende Einstellung der Kraftbegrenzungseinrichtung aufweist. Es ist vorgesehen, dass die in Abhängigkeit von den Parametern eines angeschnallten Insassen arbeitende Straffeinrichtung zur Einstellung der Kraftbegrenzungseinrichtung in Abhängigkeit von den Insassendaten das Antriebszahnrad 16 entsprechend in Drehung versetzt.

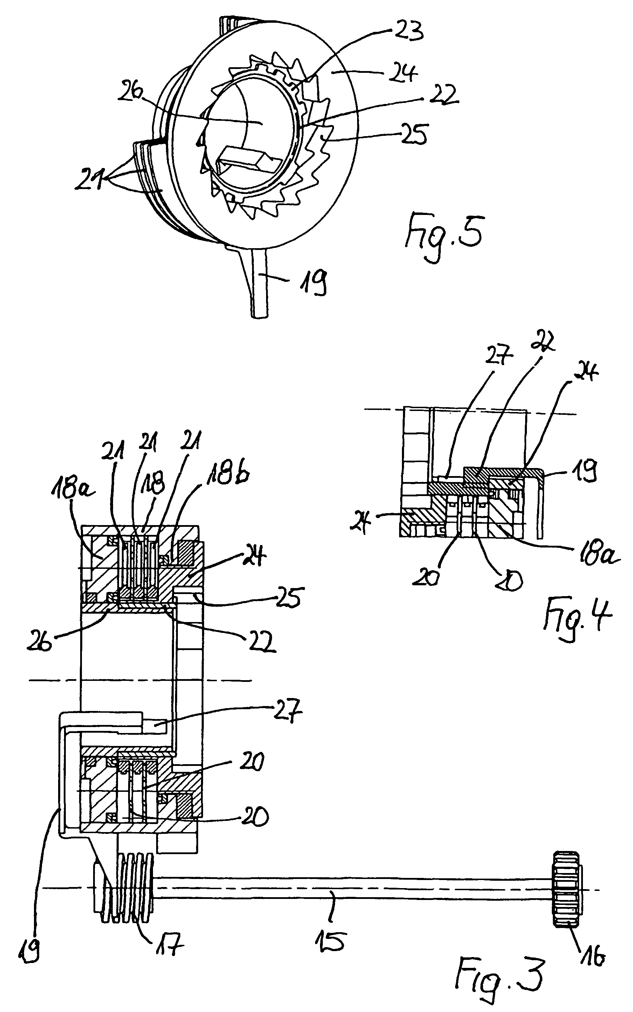

Der Aufbau der Kraftbegrenzungseinrichtung im einzelnen ergibt sich aus Figur 3. Die Kraftbegrenzungseinrichtung besteht aus einem Gehäuse 18, welches an dem Rahmen 11 des Gurtaufrollers 10 festgelegt ist und eine Stirnwand 18a als äußere Begrenzung aufweist. Der Stirnwand 18a des Gehäuses 18 gegenüberliegend ist eine Zentralwelle 24 angeordnet, die die gegenüberliegende Stirnwand des Gehäuseinnenraumes gemeinsam mit einem radialen Absatz 18b des Gehäuses 18 ausgebildet und mit einer Z-förmigen Abkröpfung nach innen einspringt und hier einen sich innen durch das ringförmige Gehäuse 18 erstreckenden Fortsatz 26 ausbildet. Die Zentralwelle ist mit einer Kupplungsverzahnung 25 versehen, in die ein nicht dargestelltes, an der Gurtwelle 12 auslenkbar gelagertes Sperrglied eingreift, wenn es zu einer gurtbandsensitiv und/oder fahrzeugsensitiv angesteuerten Blockierung des Gurtaufrollers 10 kommt.

Zwischen dem Fortsatz 26 der Zentralwelle 24 und den Scheibenkolben 21 der Kraftbegrenzungseinrichtung ist ein axial verschiebbarer Schaltring 22 angeordnet, der die innere Umfangswand des Gehäuses 18 bildet. Dieser Schaltring 22 ist auf seiner Außenseite mit einer Verzahnung 23 versehen, die in Formschlussverbindung mit einer an der Innenseite der Scheibenkolben 21 formentsprechend ausgebildeten Verzahnung steht, so dass bei Verzahnungseingriff Schaltring 22 und Scheibenkolben 21 drehfest miteinander verbunden sind. Auf der Innenseite des Fortsatzes 26 ist ein Übertragungshebel 19 axial verschiebbar angeordnet, der den Fortsatz 26 in einem Schlitz 27 durchgreift und fest mit dem Schaltring 22 verbunden ist. Eine Axialverschiebung des Übertragungshebels 19 führt somit zu einer Axialverschiebung des Schaltringes 22, so dass bei einer Verschiebung des Schaltringes 22 in der Darstellung der Figur 3 nach rechts zunächst der der Stirnwand 18a des Gehäuses nächstliegende Scheibenkolben 21 außer Eingriff mit dem Schaltring 22 kommt, so dass bei einer Drehung der an die Gurtwelle 12 gekoppelten Zentralwelle 24 nur zwei Scheibenkolben 21 mitgenommen werden, wodurch die Begrenzungskräfte verringert sind. Entsprechendes gilt bei einer noch weiteren Verschiebung des Schaltringes 22 nach rechts, bei der dann nur noch ein Scheibenkolben 21 mitgenommen wird. Entsprechend der Anzahl der in dem Gehäuse 18 angeordneten Scheibenkolben 21 ist eine weitere Abstufung der Begrenzungskräfte zu erzielen.

Zur Ausführung seiner Axialverschiebung ist der Übertragungshebel 19 aus dem Gehäuse 18 der Kraftbegrenzungseinrichtung mit einer entsprechenden Abkröpfung herausgeführt und greift in den Schneckengang der Schnecke 17 der Übertragungswelle 15. Wird somit die Übertragungswelle 15 entsprechend den Vorgaben vom Elektromotor 13 gedreht, so wird der Übertragungshebel 19 entsprechend den Vorgaben axial verschoben und steuert den Schaltring 22 entsprechend an.

## Patentansprüche

1. Sicherheitsgurtaufroller (10), insbesondere in Kraftfahrzeugen, mit einer Gurtwelle (12) als Träger des darauf gewickelten Gurtbandes und mit einer im Blockierfall wirksam werdenden Kraftbegrenzungseinrichtung, welche aus einem mit einem viskosen Medium gefüllten Gehäuse (18) mit einer Mehrzahl von darin feststehend angeordneten Zwischenscheiben (20) und mit einer Mehrzahl von zwischen den Zwischenscheiben (20) angeordneten, an die Gurtwelle (12) angeschlossenen und mit dieser drehenden Scheibenkolben (21) besteht, so dass durch die Relativbewegung von Scheibenkolben (21) und Zwischenscheiben (20) das Medium zwischen den zugeordneten Flächen zerrieben wird, **dadurch gekennzeichnet, dass** das Niveau der Kraftbegrenzung in Abhängigkeit von den Parametern des mit dem von der Gurtwelle (12) abgewickelten Gurtband angeschnallten Insassen mittels einer variablen Zu- und Abschaltung der Scheibenkolben (21) an die Gurtwelle (12) über eine zwischen Gurtwelle und Scheibenkolben (21) angeordnete Schalteinrichtung (22) einstellbar ist.

2. Sicherheitsgurtaufroller nach Anspruch 1, **dadurch gekennzeichnet, dass** die Schalteinrichtung aus einem mit der Gurtwelle (12) koppelbaren, über einen Antrieb axial in dem Gehäuse der Kraftbegrenzungseinrichtung verschiebbaren Schaltring (22) besteht, der in Abhängigkeit von seiner Schaltstellung mit einem oder mehreren der Scheibenkolben (21) in Formschlussverbindung steht.

3. Sicherheitsgurtaufroller nach Anspruch 2, **dadurch gekennzeichnet, dass** der Antrieb einen axial am Gehäuse (18) der Kraftbegrenzungseinrichtung geführten und aus dem Gehäuse (18) herausgeführten, mit dem Schaltring (22) gekoppelten Übertragungshebel (19) beaufschlagt.

4. Sicherheitsgurtaufroller nach Anspruch 2 oder 3, **dadurch gekennzeichnet, dass** der Schaltring (22) die innere Umfangswand des ringförmig ausgebildeten Gehäuses (18) der Kraftbegrenzungseinrichtung bildet und von einem den Schaltring (22) innen überdeckenden und führenden Fortsatz (26) der Gurtwelle untergriffen ist.

5. Sicherheitsgurtaufroller nach Anspruch 4, **dadurch gekennzeichnet, dass** der Fortsatz (26) Bestandteil einer gesonderten, gegenüber dem Gehäuse (18) der Kraftbegrenzungseinrichtung drehbar gelagerten und im Auslösefall mit der Gurtwelle (12) zu koppelnden Zentralwelle (24) ist.

6. Sicherheitsgurtaufroller nach Anspruch 4 oder 5, **dadurch gekennzeichnet, dass** der Übertragungshebel (19) den Fortsatz (26) in einem Schlitz (27) durchgreift und fest mit dem Schaltring (22) verbunden ist.

7. Sicherheitsgurtaufroller nach einem der Ansprüche 2 bis 6, **dadurch gekennzeichnet, dass** der Antrieb ein in Abhängigkeit von den Insassenparametern gesteuerter Motor ist.

8. Sicherheitsgurtaufroller nach einem der Ansprüche 2 bis 6 mit einer an die Gurtwelle ankoppelbaren reversiblen Straffeinrichtung, **dadurch gekennzeichnet, dass** der Antrieb (13) der Straffeinrichtung über eine mittels einer Kupplung und eines Antriebszahnrads (16) ankoppelbare Übertragungswelle (15) mit dem Übertragungshebel (19) verbindbar ist.

9. Sicherheitsgurtaufroller nach Anspruch 8, **dadurch gekennzeichnet, dass** die Übertragungswelle (15) an ihrem der Kraftbegrenzungseinrichtung zugewandten Ende mit einer Schnecke (17) versehen ist, in deren Schneckengang der Übertragungshebel (19) eingreift und durch die Drehung der Schnecke (17) axial verschiebbar ist.

## Claims

1. Safety belt retractor (10), in particular in motor vehicles, with a belt shaft (12) as a carrier of the belt strap that is wound onto it and with a force limiting device which comes into effect in the event of blocking and which comprises a housing (18) that is filled with a viscous medium and has a number of washers (20) that are arranged in inside it in a fixed manner and with a number of disk pistons (21) arranged between the washers (20) and connected to the belt shaft (12) and rotating with it, so that through the relative movement of disk pistons (21) and washers (20), the medium is rubbed between the assigned surfaces,
**characterised in that**
the level of the force limitation can be set depending on the parameters of the passenger who is belted in with the belt strap that has been unwound from the belt shaft (12), by means of a variable activation and de-activation of the disk pistons (21) on the belt shaft (12) via a switching element (22) arranged between the belt shaft and the disk piston (21).

2. Safety belt retractor as claimed in claim 1, **characterised in that** the switching element comprises a switching ring (22) which can be coupled with the belt shaft (12) and can be pushed axially in the housing of the force limitation device via a drive, and which is in form-fitting connection with one or more of the disk pistons (21).

3. Safety belt retractor as claimed in claim 2, **characterised in that** the drive pressurises a transmission lever (19) which is held axially on the housing (18) of the force limitation device and is led out of the housing (18) and is coupled with the switching ring (22).

4. Safety belt retractor as claimed in claim 2 or 3, **characterised in that** the switching ring (22) forms the inner peripheral wall of the ring-shaped housing (18) of the force limitation device, and that a projection (26) of the belt shaft engages under this [switching ring] which carries the switching ring (22) and covers over it on the inside.

5. Safety belt retractor as claimed in claim 4, **characterised in that** the projection (26) is a constituent part of a separate central shaft (24) which is pivoted relative to the housing (18) of the force limitation device and which is to be coupled to the belt shaft (12) in the event of triggering.

6. Safety belt retractor as claimed in claim 4 or 5, **characterised in that** the transmission lever (19) passes through the projection (26) in a slit (27) and is firmly connected to the switching ring (22).

7. Safety belt retractor as claimed in one of the claims 2 to 6, **characterised in that** the drive is a motor that is controlled depending on the passenger parameters.

8. Safety belt retractor as claimed in one of the claims 2 to 6, with a reversible tightening device that can be coupled to the belt shaft, **characterised in that** the drive (13) of the tightening device can be connected to the transmission lever (19) via a transmission shaft (15) by means of a coupling and a drive gearwheel (16).

9. Safety belt retractor as claimed in claim 8, **characterised in that** on its end facing the force limitation device, the transmission shaft (15) is equipped with a worm (17), into whose spiral the transmission lever (19) engages and can be pushed axially through the rotation of the worm (17).

## Revendications

1. Enrouleur de ceinture de sécurité (10), en particulier pour véhicules automobiles, comportant un arbre d'enroulement (12), formant un support pour la ceinture enroulée sur celui-ci, et comportant un dispositif de limitation de force, qui se met en action en cas de blocage et qui est formé par un boîtier (18), rempli d'un milieu visqueux et muni d'une pluralité de disques intermédiaires (20), agencés solidairement dans ledit boîtier, et d'une pluralité de pistons plats (21), agencés entre les disques intermédiaires (20), raccordés à l'arbre d'enroulement (12) et entraînés en rotation avec ce dernier, de telle sorte que le milieu contenu entre les surfaces associées est malaxé sous l'effet du mouvement relatif des pistons plats (21) et des disques intermédiaires (20), **caractérisé en ce que**, en fonction des paramètres du passager attaché avec la ceinture déroulée de l'arbre d'enroulement (12), le niveau de limitation des forces est réglable au moyen d'un couplage et découplage variable des pistons plats (21) avec l'arbre d'enroulement (12), par l'intermédiaire d'un dispositif de commande (22) agencé entre l'arbre d'enroulement (12) et les pistons plats (21).

2. Enrouleur de ceinture de sécurité selon la revendication 1, **caractérisé en ce que** le dispositif de commande est formé par une bague de commande (22) apte à être couplée à l'arbre d'enroulement (12), laquelle est mobile axialement dans le boîtier (18) du dispositif de limitation des forces par l'intermédiaire d'un mécanisme d'entraînement et laquelle, en fonction de sa position de commande, est en assemblage emboîté avec un ou plusieurs pistons plats (21).

3. Enrouleur de ceinture de sécurité selon la revendication 2, **caractérisé en ce que** le mécanisme d'entraînement sollicite un levier de transmission (19), couplé à la bague de commande (22), logé axialement sur le boîtier (18) du dispositif de limitation de force et guidé hors du boîtier (18).

4. Enrouleur de ceinture de sécurité selon la revendication 2 ou 3, **caractérisé en ce que** la bague de commande (22) forme la paroi périphérique intérieure du boîtier (18), de forme annulaire, du dispositif de limitation de force et est reçue par une saillie (26) de l'arbre, d'enroulement (12), laquelle guide et couvre de l'intérieur la bague de commande (22).

5. Enrouleur de ceinture de sécurité selon la revendication 4, **caractérisé en ce que** la saillie (26) est une pièce intégrante d'un arbre central (24) séparé, qui est monté rotatif par rapport au boîtier (18) du dispositif de limitation de force et qui est apte à être couplé avec l'arbre d'enroulement (12) en cas de déclenchement.

6. Enrouleur de ceinture de sécurité selon la revendication 4 ou 5, **caractérisé en ce que** le levier de transmission (19) s'engage à travers la saillie (26) dans une fente (27) et est assemblé fermement avec la bague de commande (22).

7. Enrouleur de ceinture de sécurité selon l'une quelconque des revendications 2 à 6, **caractérisé en ce que** le mécanisme d'entraînement est un moteur commandé en fonction des paramètres du passager.

8. Enrouleur de ceinture de sécurité selon l'une quelconque des revendications 2 à 6, comportant un rétracteur de ceinture réversible, apte à être couplé à l'arbre d'enroulement, **caractérisé en ce que** le mécanisme d'entraînement (13) du rétracteur de ceinture peut être relié au levier de transmission (19) par l'intermédiaire d'un arbre de transmission (15) pouvant être couplé au moyen d'un couplage et d'une roue dentée d'entraînement (16).

9. Enrouleur de ceinture de sécurité selon la revendication 8, **caractérisé en ce que** l'arbre de transmission (15), au niveau de son extrémité orientée vers le dispositif de limitation de force, comporte une vis sans fin (17), sachant que le levier de transmission (19) engrène dans le pas de vis de celle-ci et est mobile axialement sous l'effet de la rotation de la vis sans fin (17).
